# EUROPEAN PATENT SPECIFICATION

(11) **EP 2 581 653 B1**
(45) Date of publication and mention of the grant of the patent: **30.07.2014**
(21) Application number: 12187863.1
(22) Date of filing: 09.10.2012
(51) Int. Cl.: F21V 17/06, F21S 8/00, F21V 17/12, F21V 14/02, F21V 17/02

(54) **Light indicator**
Leuchtendes Anzeigegerät
Appareil indicateur lumineux

(30) Priority: 10.10.2011 IT PD20110319
(43) Date of publication of application: 17.04.2013
(73) Proprietor: Combustion and Energy S.r.l., 23848 Oggiono - Lecco (LC) (IT)
(72) Inventor: Di Giovine, Vincenzo, I-23900 Lecco (LC) (IT)
(74) Representative: Gallo, Luca

(56) References cited:
- WO-A1-2009/103246
- AT-U1- 7 402
- DE-A1-102005 061 815
- FR-A- 696 262
- FR-A- 759 148
- US-A1- 2006 239 000
- US-A1- 2010 220 478

## Description

### Field of application

The present invention regards a light indicator, according to the preamble of the independent claim.

Such light indicator is inserted in the industrial field of the production of signaling devices and installations equipped with light sources of LED type and it is intended to be advantageously employed to indicate to aircraft the presence of elevated structures, such as smokestacks, bridges and the like.

In particular, the aforesaid light indicator is advantageously employed for marking the presence of towers or other high buildings, especially those situated in urban areas.

### State of the art

Known on the market today are light indicators mounted for example on towers, smokestacks of industrial plants, or on bridges, pylons or on other structures which rise considerably above the ground.

The function of these conventional light indicators is to emit a light signal in a manner such that it is visible at a distance by aircraft traveling at the elevation of the indicators themselves or at elevations very close thereto.

Such distance is greater the greater the light intensity of the light signal itself, and therefore it is greater the greater the intensity of the light radiation emitted overall by the light indicator and the greater the collimation of such radiation in the horizontal plane passing through the elevation of the light indicator itself.

A conventional light indicator widespread today comprises a load bearing body, which is extended along its longitudinal axis, and a plurality of light emitting diodes (LED) mechanically fixed to the outer wall of the load bearing body.

This conventional light indicator also comprises means for collimating the light which are fixed to the load bearing body itself and are able to collimate the light radiation emitted by the aforesaid LED into light beams directed in an emission direction that is radial to the load bearing body, i.e. perpendicular to the longitudinal axis of the load bearing body itself.

In particular, the function of these conventional collimators is to have the aforesaid light beams strongly collimated in order to obtain a light signal perceptible at high distance in this emission direction. In particular, the aforesaid light beams have an aperture angle which is substantially equal to 3°, such aperture angle being measured in a plane passing through the longitudinal axis of the load bearing body.

This conventional light indicator is also equipped with a support device able to retain the indicator at a structure to be marked, which for example can be a part of a smokestack, pylon or building etc.

This support device defines the orientation of the light indicator with respect to the structure to be marked and therefore defines the orientation of the aforesaid direction of emission of the light beams with respect to the plane of the horizon.

Conventionally, the aforesaid support device is of different type according to the structure to be marked, to which the light indicator is fixed.

A first type of support device known today comprises a support base able to be bolted to the base of the load bearing body and support legs integral and mechanically fixed to the support base.

These support legs are able to be mechanically fixed to the aforesaid structure to be signaled.

A second type of conventional support device comprises a support base able to be bolted to the base of the load bearing body and a rod mechanically fixed to the support base and having an extension axis coinciding with the longitudinal axis of the load bearing body.

This second support device conventionally also comprises a base bracket able to be mechanically fixed to the aforesaid structure to be marked.

A third type of conventional support device comprises a support base able to be bolted to the base of the load bearing body and an arm which projects from the support base perpendicular to the longitudinal axis of the load bearing body.

This arm conventionally has a fixing bracket adapted to be mechanically fixed to the structure to be marked.

A drawback of this conventional light indicator consists of the fact that when it is fixed to the aforesaid structure to be marked by means of one of the aforesaid support devices of known type, it has the direction of emission of the light beams which generally is not parallel to the plane of the horizon; in such a manner, the visibility of the light indicator by aircraft which travel at the elevation of the indicator or at an elevation close thereto is compromised.

In particular, the incorrect orientation of the direction of emission of the light beams emitted by the LED of the indicator is due to the fact that the support device is rigidly fixed to a support plane of the structure to be marked, whose surface is not arranged leveled i.e. it has irregularities that do not allow arranging the base of the support device exactly horizontal.

The patent WO 2009/103246 describes a light indicator comprising a containment body inside of which multiple LED are mounted, arranged around a reflection body adapted to reflect the light emitted by the LED towards the outside.

More in detail, the containment body comprises an annular support plate intended to be fixed to a connection base with concave form. The latter is fixed to a conventional support device (of one of the above-described types), and contains a power socket therein for supplying power to the LED.

On the support plate of the indicator, an electrical connection device is arranged that is connected to the LED and intended to be connected to the power outlet contained in the connection base.

More in detail, the electrical connection device comprises a tubular body fixed to the support plate of the indicator and containing three columns at its interior which at the base thereof are rigidly fixed to the support plate; at the top thereof such columns support an upper plate on which the reflection body and the LED of the indicator are mounted.

A fixed disc is arranged between the upper plate and the support plate, such fixed disc rigidly connected to the tubular body. A movable disc is also arranged here, which is positioned below the fixed disc and is equipped with guide holes in which the three columns are inserted; the movable disc bears a connector mounted that is intended to be inserted in the power outlet of the connection base in order to power supply the LED. Between the fixed disc and the movable disc, three springs are arranged that are able to be compressed when the electrical connector of the movable disc is inserted in the power outlet of the connection base, in order to move the movable disc upward to adapt the position of the electrical connector to the elevation of the power outlet.

The indicator of known type described in the patent WO 2009/103246 does not at all allow correcting the incorrect orientation of the axes of emission of the LED light, since the support plate of the indicator is rigidly fixed to the connection base.

The patent US 2010/220478 describes a further light indicator of known type comprising a support base on which multiple support rings are arranged in rows, one on top of the other, each bearing, circumferentially mounted, a plurality of LED. Three alignment rods are mounted on the support base, such rods inserted in corresponding alignment holes obtained on the support rings in order to retain the latter integral with each other. The support base of the indicator is fixed to the structure to be marked by means of one of the support devices of known type described above, and does not at all allow precisely determining the orientation of the direction of emission of the light ray beams emitted by the LED.

Document DE 102005061815 discloses a known light indicator comprising a tubular bearing body extending along a longitudinal axis, and a plurality of lighting sources fixed on the external surface of the bearing body in correspondence of plane faces of this surface, which are inclined downward with respect to the longitudinal axis of the bearing body so that the lighting sources emits light rays toward the ground.

The light indicator described in DE 102005061815 has not an adjustable support device for regulating the orientation of the light beams emitted by the lighting sources. Document FR 696262 discloses a known lamp provided with a support device that comprises four threaded rods fixed to the bottom of the lamp and inserted in corresponding holes of a base. Furthermore, the support device comprises a first spring positioned around each rod and compressed between the base and a nut screwed to the free end of the rod, and a second spring compressed between the base and the bottom of the lamp. By screwing or unscrewing each nut along the corresponding rod, the nut causes respectively the compression or the stretching of the corresponding springs varying the inclination of the lamp with respect to the base.

A drawback of the lamp described in FR 696262 consists in the fact that it is not suitable for being installed outdoor (in particular on the top of elevated structures, such as smokestacks, bridges, towers) because the weather agents (such as the wind, the rain, etc.), acting on the lamp, can easily deform the springs of the support device causing unwanted oscillations and variations of the position of the lamp and so unwanted oscillations and variations of the direction of emission of the emitted light beams. Document US 2006/239000 discloses a known light indicator comprising a bearing body provided with a bottom closed by a transparent hollow cover, and an adjustable base arranged within the bearing body and supporting a LED. Furthermore, the light indicator comprises four threaded rods fixed on the bottom of the bearing body and inserted in corresponding four holes of the adjustable base supporting the LED. The base leans on four nuts screwed to the corresponding rods and movable along the latter for adjusting the inclination of the base itself.

A drawback of the light indicator described in US 2006/239000 consists in the fact that it requires to open the cover of the bearing body for adjusting the tilt of the LED, which requires uncomfortable and difficult operations, above all in the ambient where the light indicator is installed such as the top of smokestacks, bridges, towers.

### Presentation of the invention

In this situation, the main object of the present invention is therefore to overcome the drawbacks manifested by the solutions of known type, by providing a light indicator that is capable of functioning in a more efficient and effective manner with respect to the conventional light indicators described above.

Further object of the present invention is to provide a light indicator that allows emitting a light signal along a horizontal plane passing through the elevation of the light indicator itself, in a more reliable manner than the conventional light indicator described above.

Still another object of the present invention is to provide a light indicator that allows adjusting the direction of emission of the light signal that it emits with respect to the plane of the horizon.

Another object of the present invention is to provide a light indicator that allows being easily installed at the top of towers, smokestacks or other high structures in order to signal the presence thereof to aircraft.

Still another object of the present invention is to provide a light indicator that is structurally simple and economical to produce.

These and still other objects are achieved by a light indicator, object of the present invention, according to the below-reported claims.

### Brief description of the drawings

The technical characteristics of the finding, according to the proposed objects, can be clearly seen in the contents of the below-reported claims and the advantages of the same will be more evident in the detailed description of two preferred but not exclusive embodiments of a light indicator, according to the present invention, illustrated as exemplifying and non-limiting in the drawing table set, in which:

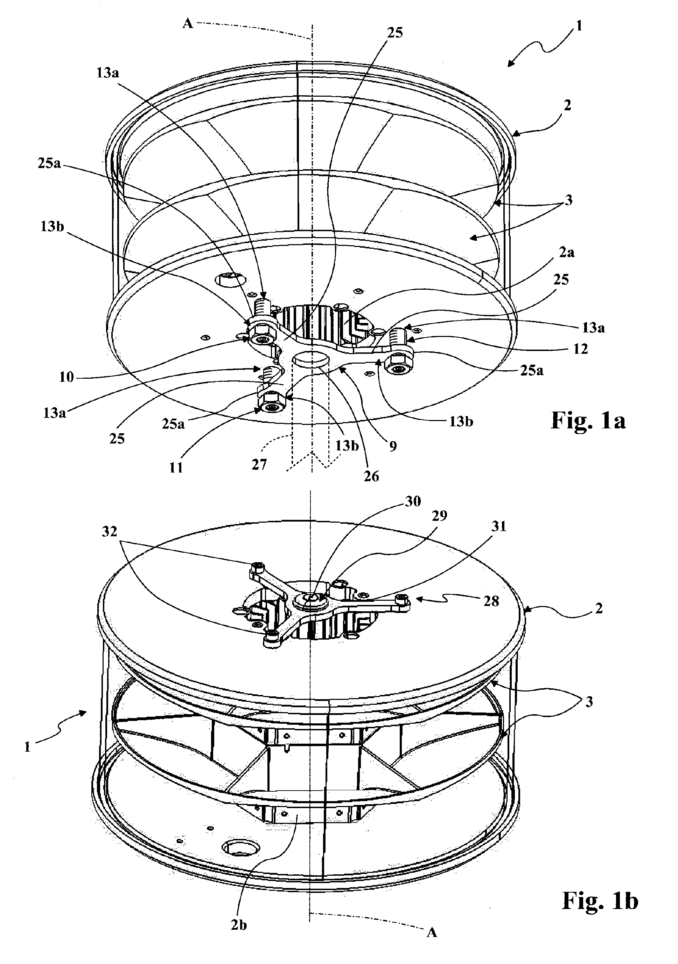

- figure 1a illustrates, in bottom perspective view, a light indicator according to a first embodiment of the present invention, which has a load bearing body to which a support device and levelness detection device are fixed;
- figure 1b illustrates, in top perspective view, the light indicator of figure 1a;
- figure 2 illustrates, in side elevation view, the light indicator of figure 1a;

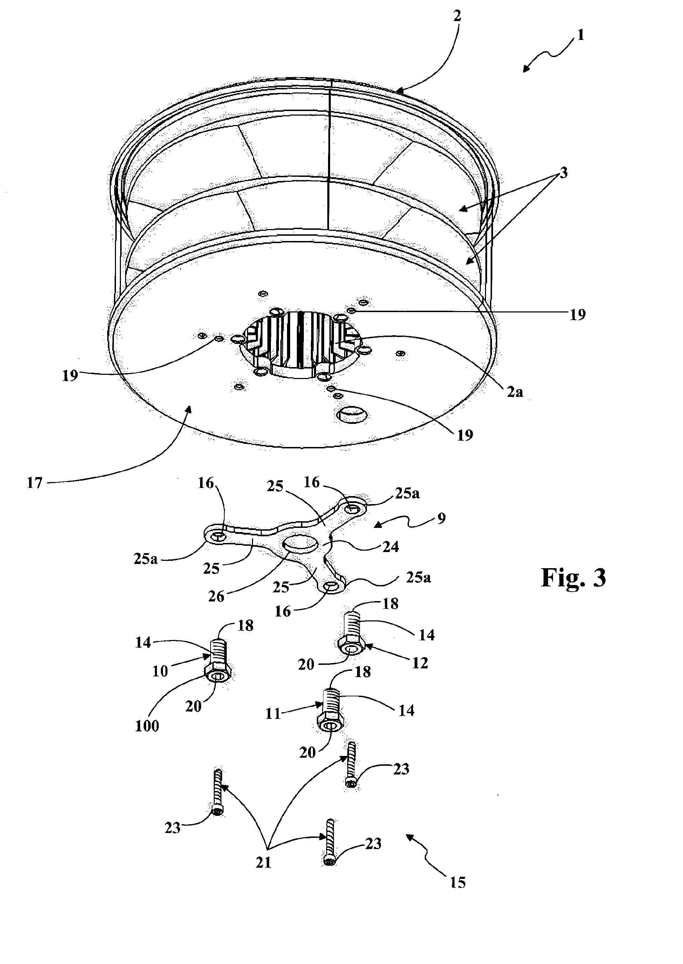

- figure 3 illustrates, in top perspective view, the light indicator of figure 1a, with the support device illustrated in exploded view;

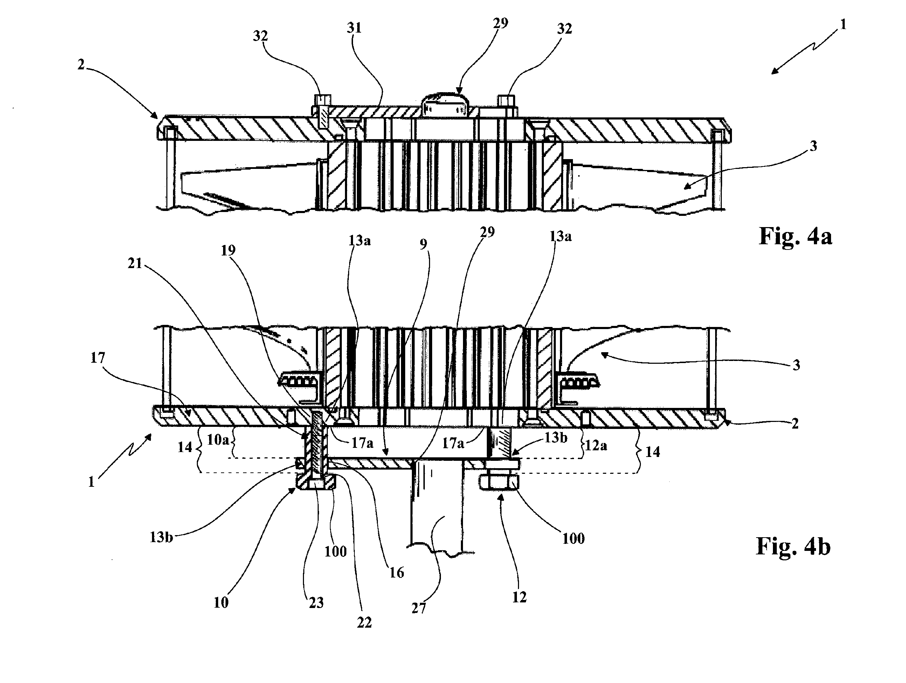

- figure 4a illustrates a detail of the light indicator of figure 1a regarding the upper part of the load bearing body and the levelness detection device sectioned along the plane IV-IV of figure 2;
- figure 4b illustrates a detail of the light indicator of figure 1a regarding the lower part of the load bearing body and the support device sectioned along the plane IV-IV of figure 2;

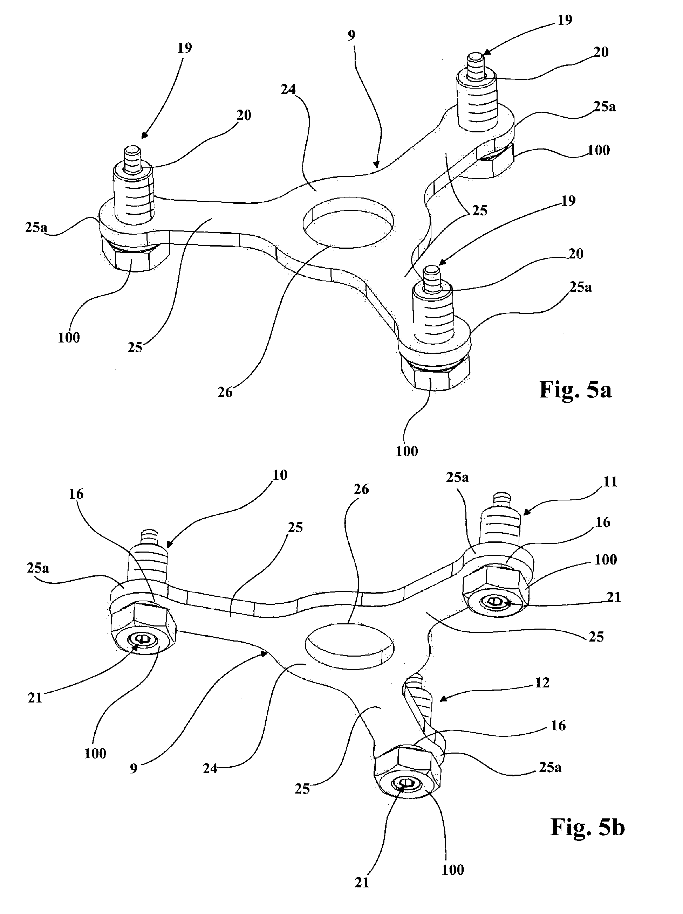

- figure 5a illustrates, in top perspective view, a detail of the light indicator of figure 1a regarding the support device, the load bearing body not being illustrated in order to better show the support device itself;
- figure 5b illustrates, in bottom perspective view, the support device of figure 5a;

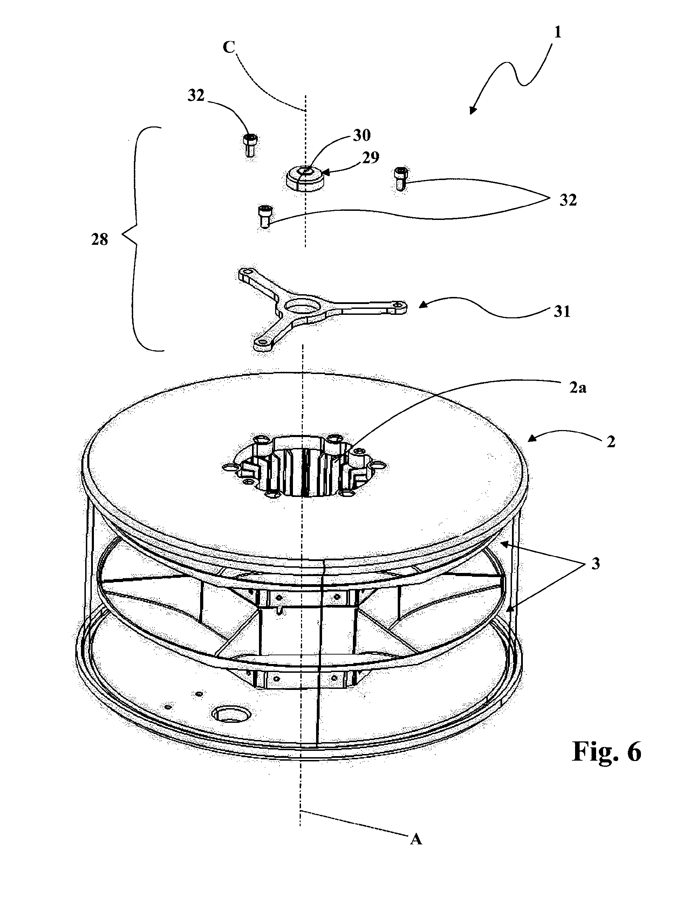

- figure 6 illustrates, in bottom perspective view, the light indicator of figure 1a, with the levelness detection device illustrated in exploded view;
- figure 7 illustrates, in bottom perspective view, a light indicator according to a second embodiment of the present invention, which has a load bearing body to which a support device is fixed.

### Detailed description of a preferred embodiment

With reference to the drawing set, a light indicator according to a first embodiment of the present invention is indicated in its entirety with 1.

This light indicator 1 is inserted in the industrial field of the production of signaling devices and installations equipped with light sources of LED type and is intended to be advantageously employed to indicate to aircraft the presence of elevated structures, such as smokestacks, bridges, towers or the like.

In accordance with a first preferred embodiment of the present invention, the light indicator 1 comprises a load bearing body 2 equipped with at least one direction of extension along a longitudinal axis A. Preferably, the load bearing body 2 is extended with tubular form along such longitudinal axis A.

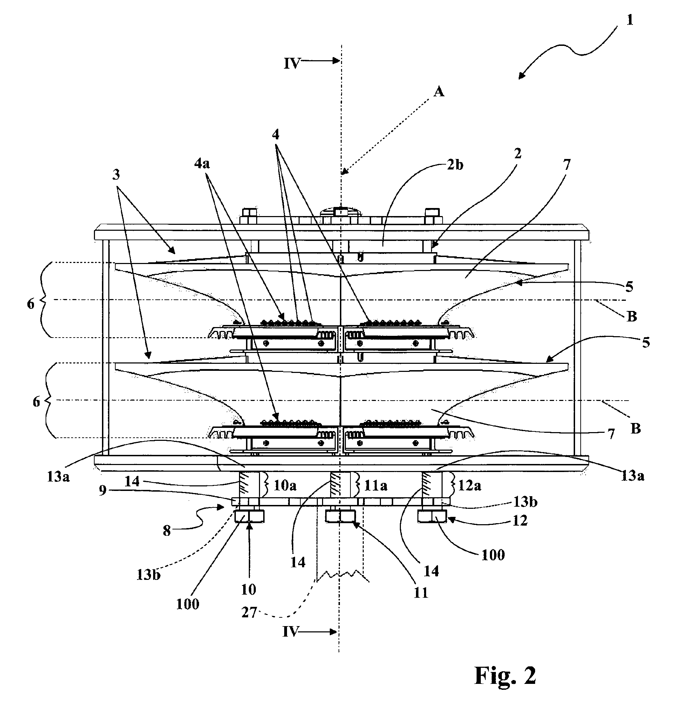

In addition, the light indicator 1 comprises light emitting means 3 which are mechanically fixed to the load bearing body 2 and have at least one emission plane B substantially perpendicular to the longitudinal axis A, such as for example is visible in figure 2. Advantageously, the load bearing body 2 is equipped with an inner wall 2a and an outer wall 2b on which the light emitting means 3 are fixed.

The inner wall 2a defines a channel inside the load bearing body 2 able to be crossed by a convective air flow for the cooling of the load bearing body 2 itself when this is heated by the light emitting means 3 during the functioning of the latter.

In detail, the light emitting means 3 preferably comprise LED 4 and collimation means 5 superimposed on the LED 4. In more detail, the LED 4 of the aforesaid light emitting means 3 are organized in groups 4a mechanically fixed to the outer wall of the load bearing body 2 and arranged in levels 6 superimposed along the extension axis A.

In accordance with the aforesaid first embodiment, the aforesaid light emitting means 3 advantageously comprise two levels 6 of groups 4a of LED 4 which emit light along two parallel emission planes B.

Always in accordance with the present embodiment, the collimation means 5 preferably comprise parabolic mirror-like elements 7 fixed to the outer wall 2b of the load bearing body 2, each having a group 4a of LED 4 placed in its focus, such that the light radiation emitted by these same LED 4 is reflected parallel to the emission planes B by each parabolic mirror-like element 7.

The light indicator 1 also comprises a support device 8 which has a base 9 mechanically connected to the load bearing body 2.

According to the present invention, the aforesaid light indicator 1 has a particular feature in that the support device 8 comprises at least three spacer elements (indicated in the figures as an example with the reference numbers 10, 11 and 12) mechanically connected to the base 9 and to the load bearing body 2, at least two of these spacer elements being adjustable spacer elements, which are able to be actuated to adjust the tilt of the load bearing body 2 with respect to the base 9, to adjust the tilt of the emission planes B with respect to the base 9 and therefore with respect to the horizontal.

In accordance with the present embodiment of the present invention, the indicator 1 advantageously comprises three spacer elements 10, 11 and 12 which are all three adjustable spacer elements; therefore, below and in the enclosed drawings, the spacer elements and the adjustable spacer elements are indiscriminately indicated with the reference numbers 10, 11 and 12.

In alternative embodiments of the present invention, not illustrated in the enclosed figures, more than three spacer elements can be provided of which preferably at most one is not adjustable while the remaining spacer elements are adjustable spacer elements, in order to allow varying the tilt of the load bearing body with respect to the base of the support device along at least two mutually incident tilt axes perpendicular to the extension axis of the load bearing body.

In accordance with the aforesaid first embodiment, in detail, for each of the spacer elements 10, 11 and 12, the load bearing body 2 comprises an upper connection part 13a and the base 9 comprises a lower connection part 13b.

According to the present invention, each of the adjustable spacer elements 10, 11 and 12 is equipped with a threaded portion 14 coupled in screwing relationship with an adjustable part of the upper and lower connection parts 13a and 13b. Said adjustable connection part according to the present embodiment is advantageously the lower connection part 13b and therefore below and in the enclosed drawing set, the adjustable connection part and the lower connection part are indiscriminately indicated with reference 13b since they are coinciding.

According to the present embodiment, the adjustable connection part 13b is advantageously constituted by a threaded hole 16 obtained in the base 9, the load bearing body 2 is conveniently equipped with a bottom 17 and each upper connection part 13a is advantageously constituted by a support portion 17a of the bottom 17. Preferably, the adjustable spacer elements 10, 11 and 12 are equipped with an abutment face 18 able to be engaged by abutment with the corresponding support portion 17a of the bottom 17.

In other words, the adjustable spacer elements 10, 11 and 12 have the threaded portion 14 engaged in the threaded hole 16 of the base 9 and the abutment face 18 in abutment against the support portion 17a of the bottom 17. The distance between the bottom 17 of the load bearing body 2 and the base 9 is locally defined between the support portion 17a of the same bottom 17 and the threaded hole 16 of the same base 9. In particular, said distance is locally given by the length of a section 10a, 11a or 12a of each adjustable spacer element 10, 11 and 12 whose section 10a, 11a or 12a is extended between the bottom 17 and the base 9, i.e. it is comprised, for each adjustable spacer element 10, 11 and 12, between the support portion 17a of the bottom 17 and the threaded hole 16 of the base 9.

Operatively, the aforesaid distance is locally modified by screwing or unscrewing each adjustable spacer element 10, 11 and 12 in the base 9. In particular, each adjustable spacer element 10, 11 and 12 can be screwed or unscrewed in the base 9 in an independent manner with respect to the other adjustable spacer elements 10, 11 and 12, in order to independently modify the length of each section thereof 10a, 11a or 12a and thus adjust the tilt of the load bearing body 2 with respect to the base 9 and thus the tilt of the emission planes B with respect to the horizontal.

In other words, according to the present invention, each of the adjustable spacer elements 10, 11 or 12 is able to be screwed and unscrewed with respect to a corresponding adjustable connection part 13b in order to vary the distance between the lower connection part 13b and the upper connection part 13a to adjust the tilt of the emission plane B of the light emitting means 3 with respect to the base 9, and thus with respect to the horizontal.

Preferably, the light indicator 1 also comprises locking means 15 connected to the adjustable spacer elements 10, 11 and 12 and to a fixed part of the upper and lower connection parts 13a and 13b; such fixed part according to the aforesaid first embodiment of the present invention advantageously is the upper connection part 13a and therefore below and in the enclosed drawing set, the fixed connection part and the upper connection part are indiscriminately indicated with the reference 13a since they are coinciding. The locking means 15 are able to lock the screwing and unscrewing of each adjustable spacer element 10, 11 or 12 of the support device 8 with respect to the adjustable connection part 13b.

In more detail, the support portions 17a of the bottom 17 of the load bearing body 2 are equipped advantageously with threaded seats 19. Preferably the adjustable spacer elements 10, 11 and 12 have a through hole 20 coaxial with the threaded portion 14. The locking means 15 advantageously comprises screws 21, each of which engaging in succession a through hole 20 and a threaded seat 19, to lock each adjustable spacer element 10, 11 or 12 of the support device 8 to the bottom 17 of the load bearing body 2.

Advantageously, each through hole 20 has an inner shoulder 22 able to receive the head 23 of the screw 21 in abutment.

Operatively, after having screwed or unscrewed one of the adjustable spacer elements 10 or 11 or 12 in the base 9, such adjustable spacer elements can be locked by locking the screws 21 in the threaded seats 19 with the heads 23 of the screws 21 themselves engaging the inner shoulders 22 of the adjustable spacer elements 10, 11, 12. This is done in order to avoid undesired screwing or unscrewing movements of the adjustable spacer elements 10, 11, 12 in the threaded holes 16 of the base 9 and hence to avoid undesired tilts of the emission planes B with respect to the horizontal.

Preferably, the adjustable spacer elements 10, 11 and 12 advantageously have engagement parts 100 of hexagonal form, able to be engaged with an instrument adapted to screw or unscrew the adjustable spacer elements 10, 11 and 12 in the base 9. In particular, the engagement parts 100 are preferably placed at one longitudinal end of the adjustable spacer elements 10, 11 and 12, the abutment face 18 being arranged at the other end. The engagement parts 100 advantageously define a screwing end stop of the adjustable spacer elements 10, 11 and 12 in the base 9.

Preferably, in accordance with the present embodiment, the support portions 17a of the bottom 17 are in positions circumferential to the longitudinal axis A of the load bearing body 2 and are placed at regular angular intervals around the longitudinal axis A, in particular the three spacer elements 10, 11, 12 are preferably connected to three corresponding support portions 17a which are placed at angular intervals of 120° around the longitudinal axis A in order to obtain an isostatic support of the load bearing body 2 on the base 9.

In more detail, the base 9 of the support device 8 in accordance with the aforesaid first embodiment of the present invention advantageously comprises a central part 24 and three arms 25 which are connected to the central part 24, with which they advantageously form a single body, and have free ends 25a which are radially extended from the central part 24 itself. Each threaded hole 16 of the base 9 is advantageously formed on a corresponding one arm of the arms 25.

In addition, advantageously the central part 24 has a coupling seat 26 coaxial with the longitudinal axis A of the load bearing body 2 and able to be coupled with a support shaft 27 of the light indicator 1.

In addition, in embodiment variants of the base 9 of the support device 8, *per se* conventional and not illustrated in the enclosed figures, the base 9 can comprise surface support legs or a support arm projecting from the base 9 in a direction transverse and advantageously radial to the longitudinal axis A of the load bearing body 2.

Advantageously, the light indicator 1 according to the present invention also comprises a levelness detection device 28 fixed to the load bearing body 2 and able to indicate the tilt of the emission planes B of the light emitting means 3 with respect to the horizontal. In detail, the levelness detection device 28 comprises a fluid-tight capsule 29 containing two fluids of which a first forms a bubble floating in the second. The fluid-tight capsule 29 is equipped with a transparent upper portion 30, formed as a spherical cap and having a central axis of symmetry C parallel to the longitudinal axis A of the load bearing body 2.

Functionally, the position of the aforesaid bubble with respect to the central axis of symmetry C is indicative of the tilt of the emission planes B of the light emitting means 3 with respect to the horizontal. Hence, it is possible to adjust the adjustable spacer elements 10, 11, 12 by screwing and unscrewing them in the base 9 in a manner so as to bring the aforesaid bubble aligned with the central axis of symmetry C in order to obtain the levelness of the emission planes B.

In more detail, the levelness detection device 28 preferably comprises a support bracket 31 mechanically connected to the fluid-tight capsule 29 and to the load bearing body 2, e.g. by means of threaded elements 32. The fluid-tight capsule 29 is preferably supported by the support bracket 31 with the central axis of symmetry C coinciding with the longitudinal axis A of the load bearing body 2.

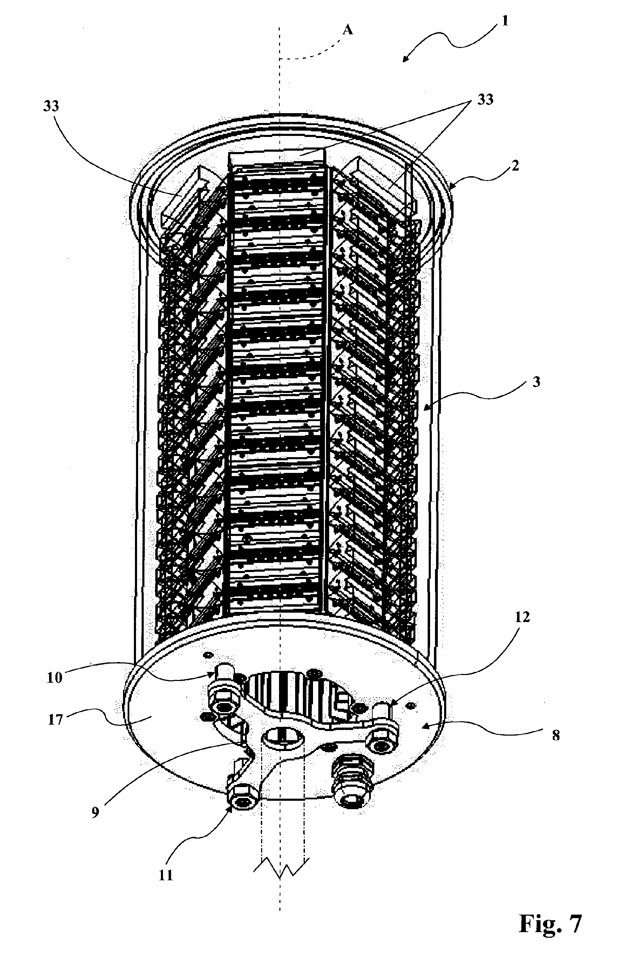

A second preferred embodiment of the light indicator 1 according to the present invention is illustrated as a non-limiting example in figure 7 where, for the sake of descriptive simplicity, the reference numbers of the corresponding elements described up to now will be maintained.

The light indicator 1 in accordance with this second embodiment differs from the aforesaid first embodiment due to the fact that the collimation means 5 comprise collimation lenses 33 superimposed on the groups 4a of LED 4 and able to collimate the light emitted by the latter LED 4 along emission planes B parallel to each other and perpendicular to the longitudinal axis A of the load bearing body 2.

It has been established in practice that a light indicator according to the finding attains the preset task and objects.

## Claims

1. Light indicator (1) comprising:
- a load bearing body (2) equipped with at least one direction of extension along a longitudinal axis (A),
- light emitting means (3) mechanically fixed to said load bearing body (2) and having at least one emission plane (B) substantially perpendicular to said longitudinal axis (A),
- a support device (8) having a base (9) mechanically connected to said load bearing body (2), and comprising at least three spacer elements (10, 11, 12) each mechanically connected to a corresponding upper connection part (13a) of said load bearing body (2) and to a corresponding lower connection part (13b) of said base (9), said spacer elements (10, 11, 12) comprising at least two adjustable spacer elements (10, 11, 12) each equipped with a threaded portion (14) coupled in screwing relationship with an adjustable part of said lower and upper connection parts (13a, 13b), each of said adjustable spacer elements (10, 11, 12) being able to be screwed and unscrewed with respect to said corresponding adjustable connection part in order to vary the distance between said lower connection part (13b) and the corresponding said upper connection part (13a) to adjust the tilt of the emission plane (B) of said light emitting means (3) with respect to said base (9);
said light indicator (1) being **characterized in that**:
- said light indicator (1) comprises locking means (15) connected to said adjustable spacer elements and to a fixed part (13a) of said lower and upper connection parts (13a, 13b) and able to lock the screwing and unscrewing of each adjustable spacer element (10, 11, 12) of said support device (8) with respect to said corresponding adjustable connection part (13b);
- said adjustable connection part (13b) is said lower connection part (13b) which consists of a threaded hole (16) formed in said base (9), said load bearing body (2) being equipped with a bottom (17) and each said upper connection part (13a) consisting of a support portion (17a) of said bottom (17), said adjustable spacer elements (10, 11, 12) being equipped with an abutment face (18) able to be engaged by abutment with the corresponding support portion (17a) of said bottom (17);
- the support portions (17a) of said bottom (17) are equipped with threaded seats (19), said adjustable spacer elements (10, 11, 12) having a through hole (20) coaxial with the threaded portion (14) of said adjustable spacer elements (10, 11, 12), said locking means (15) comprising screws (21) each engaging, in succession, a through hole (20) of said adjustable spacer elements (10, 11, 12) and a threaded seat (19) of said bottom (17), to lock each adjustable spacer element (10, 11, 12) of said support device (8) to the bottom (17) of said load bearing body (2).

2. Light indicator (1) according claim 1, **characterized in that** the support portions (17a) of said bottom (17) are circumferential to the longitudinal axis (A) of said load bearing body (2) and arranged at regular angular intervals around said longitudinal axis (A).

3. Light indicator (1) according to claim 2, **characterized in that** the base (9) of said support device (8) comprises a central part (24) and three arms (25) which are connected to said central part (24) and have free ends (25a) extending radially from said central part (24), each threaded hole (16) of said base (9) being formed on a corresponding one arm of said arms (25).

4. Light indicator (1) according to claim 3, **characterized in that** the central part (24) of said base (9) has a coaxial coupling seat (26) centered at the longitudinal axis (A) of said load bearing body (2) and able to be coupled with a support shaft (27) of said light indicator (1).

5. Light indicator (1) according to any one of the preceding claims, **characterized in that** it comprises a levelness detection device (28) fixed to said load bearing body (2) and able to indicate the tilt of the emission plane (B) of said light emitting means (3) with respect to the horizontal.

6. Light indicator (1) according to claim 5, **characterized in that** said levelness detection device (28) comprises a fluid-tight capsule (29) containing two fluids, of which a first forms a bubble floating in the second, said fluid-tight capsule (29) being equipped with a transparent upper portion (30), formed as a spherical cap and having at least one central axis of symmetry (C) parallel to the longitudinal axis (A) of said load bearing body (2), the position of said bubble with respect to said central axis of symmetry (C) being indicative of the tilt of the emission plane (B) of said light emitting means (3) with respect to the horizontal.

7. Light indicator (1) according to claim 6, **characterized in that** said levelness detection device (28) comprises a support bracket (31) mechanically connected to said load bearing body (2) and to said fluid-tight capsule (29), said fluid-tight capsule (29) being supported by said support bracket (31) with said central axis of symmetry (C) coinciding with the longitudinal axis (A) of said load bearing body (2).

## Patentansprüche

1. Leuchtendes Anzeigegerät (1), das Folgendes umfasst:
- einen tragenden Körper (2), der mindestens eine Verlaufsrichtung entlang einer Längsachse (A) aufweist,
- Licht emittierende Elemente (3), die mechanisch an dem genannten tragenden Körper (2) befestigt sind und mindestens eine Emissionsfläche (B) aufweisen, die im Wesentlichen senkrecht zu der genannten Längsachse (A) ist,
- eine Haltevorrichtung (8) mit einer Basis (9), die mechanisch mit dem genannten tragenden Körper (2) verbunden ist und mindestens drei Abstandselemente (10, 11, 12) umfasst, von denen jedes mechanisch mit einem entsprechenden oberen Verbindungsteil (13a) des genannten tragenden Körpers (2) und mit einem entsprechenden unteren Verbindungsteil (13b) der genannten Basis (9) verbunden ist, wobei die genannten Abstandselemente (10, 11, 12) mindestens zwei regulierbare Abstandselemente (10, 11, 12) umfassen, von denen jedes mit einem Gewindeabschnitt (14) ausgestattet ist, der in einem Schraubverhältnis mit einem regulierbaren dieser unteren und oberen Verbindungsteile (13a, 13b) verbunden ist, der geeignet ist, im Verhältnis zum entsprechenden regulierbaren Verbindungsteil verschraubt oder gelöst zu werden, um den Abstand zwischen dem genannten unteren Verbindungsteil (13b) und dem entsprechenden oberen Verbindungsteil (13a) zu variieren, um die Neigung der Emissionsfläche (B) der genannten Licht emittierenden Elemente (3) im Verhältnis zur genannten Basis (9) zu regeln;
wobei das genannte leuchtende Anzeigegerät (1) **dadurch gekennzeichnet ist, dass**:
das genannte leuchtende Anzeigegerät (1) Blockierungselemente (15) umfasst, die mit den genannten regulierbaren Abstandselemente und einem festen (13a) der genannten unteren und oberen Verbindungsteile (13a, 13b) verbunden und geeignet sind, das Verschrauben und Lösen jedes regulierbaren Abstandselements (10, 11, 12) der genannten Haltevorrichtung (8) im Verhältnis zum entsprechenden genannten regulierbaren Verbindungsteil (13b) zu blockieren;
der genannte regulierbare Verbindungsteil (13b) der genannte untere Verbindungsteil (13b) ist, der aus einer Gewindebohrung (16) in der genannten Basis (9) besteht, wobei der genannte tragende Körper (2) mit einem Boden (17) versehen ist und jeder der oberen Verbindungsteile (13a) aus einem Auflageabschnitt (17a) des genannten Bodens (17) besteht, wobei die genannten regulierbaren Abstandselemente (10, 11, 12) mit einer Gegenfläche (18) ausgestattet sind, die geeignet ist, von dem entsprechenden Auflageabschnitt (17a) des genannten Bodens (17) als Anschlag in Anspruch genommen zu werden;
die Auflageabschnitte (17a) des genannten Bodens (17) mit Einschrauböffnungen (9) ausgestattet sind, wobei die genannten regulierbaren Abstandselemente (10, 11, 12) eine durchgehende Bohrung (20) aufweisen, die koaxial zum Gewindeabschnitt (14) der genannten regulierbaren Abstandselemente (10, 11, 12) liegt, wobei die genannten Blockierungselemente (15) Schrauben (21) umfassen, von denen jede nacheinander eine durchgehende Bohrung (20) der genannten regulierbaren Abstandselemente (10, 11, 12) und eine Einschrauböffnung (19) des genannten Bodens (17) belegt, um jedes regulierbare Abstandselement (10, 11, 12) der genannten Haltevorrichtung (8) am Boden (17) des genannten tragenden Körpers (2) zu blockieren.

2. Leuchtendes Anzeigegerät (1) nach Anspruch 1, **dadurch gekennzeichnet, dass** die Auflageabschnitte (17a) des genannten Bodens (17) umlaufend zur Längsachse (A) des genannten tragenden Körpers (2) liegen und in regelmäßigen Winkelabständen um die genannte Längsachse (A) herum angeordnet sind.

3. Leuchtendes Anzeigegerät (1) nach Anspruch 2, **dadurch gekennzeichnet, dass** die Basis (9) der genannten Haltevorrichtung (8) einen mittleren Teil (24) und drei Arme umfasst (25), die mit dem mittleren Teil (24) verbunden sind und freie Enden (25a) aufweisen, die strahlenförmig von dem genannten mittleren Teil (24) verlaufen, wobei jede Gewindebohrung (16) der genannten Basis (9) sich auf einem entsprechenden der genannten Arme (25) befindet.

4. Leuchtendes Anzeigegerät (1) nach Anspruch 3, **dadurch gekennzeichnet, dass** der mittlere Teil (24) der genannten Basis (9) einen koaxialen Verbindungssitz (26) aufweist, der auf der Längsachse (A) des genannten tragenden Körpers (2) zentriert ist und geeignet ist, sich mit einer Haltestange (27) des genannten leuchtenden Anzeigegeräts (1) zu verbinden.

5. Leuchtendes Anzeigegerät (1) nach einem beliebigen der vorangegangenen Ansprüche, **dadurch gekennzeichnet, dass** es eine Vorrichtung zum Messen der Waagerechte (28) umfasst, die an dem genannten tragenden Körper (2) angebracht und geeignet ist, die Neigung der Emissionsfläche (B) der genannten Licht emittierenden Elemente (3) im Vergleich zur waagerechten Lage anzugeben.

6. Leuchtendes Anzeigegerät (1) nach Anspruch 5, **dadurch gekennzeichnet, dass** die genannte Vorrichtung zum Messen der Waagerechte (28) eine hermetische Kapsel (29) umfasst, die zwei Flüssigkeiten enthält, von denen die erste eine in der zweiten schwimmende Blase bildet, wobei die genannte hermetische Kapsel (29) mit einem oberen durchsichtigen Teil (30) versehen ist, der aus einer kugelförmigen Kappe besteht und mindestens eine mittlere Symmetrieachse (C) parallel zur Längsachse (A) des genannten tragenden Körpers (2) aufweist, wobei die Position der genannten Blase im Vergleich zu der genannten mittleren Symmetrieachse (C) die Neigung der Emissionsfläche (B) der genannten Licht emittierenden Elemente (3) im Verhältnis zur waagerechten Lage angibt.

7. Leuchtendes Anzeigegerät (1) nach Anspruch 6, **dadurch gekennzeichnet, dass** die genannte Vorrichtung zum Messen der Waagerechte (28) eine Halterung (31) umfasst, die mechanisch mit dem genannten tragenden Körper (2) und der genannten hermetischen Kapsel (29) verbunden ist, wobei die genannte hermetische Kapsel (29) von der genannten Halterung (31) getragen wird und die genannte mittlere Symmetrieachse (C) mit der Längsachse (A) des genannten tragenden Körpers (2) übereinstimmt.

## Revendications

1. Appareil indicateur lumineux (1) comprenant :
- un corps porteur (2) doté d'au moins une direction de développement le long d'un axe longitudinal (A) ;
- des dispositifs d'émission de lumière (3) fixés mécaniquement sur ledit corps porteur (2) et ayant au moins un plan d'émission (B) essentiellement perpendiculaire audit axe longitudinal (A) ;
- un dispositif de support (8) avec une base (9) reliée mécaniquement au corps porteur (2) et comprenant au moins trois éléments d'espacement (10, 11, 12), chacun relié mécaniquement à une pièce correspondante de raccordement supérieure (13a) du corps porteur (2) et une pièce correspondante de raccordement inférieure (13b) de ladite base (9), ces éléments d'espacement (10, 11, 12) comprenant au moins deux unités réglables (10, 11, 12) chacune dotée d'une partie filetée (14) appariée par un rapport de vissage avec une portion réglable des parties susmentionnées de raccordement inférieure et supérieure (13a, 13b), et chacun desdits éléments d'espacement réglables (10, 11, 12) pouvant être vissé à la partie correspondante sus-indiquée du raccord réglable de façon à faire varier la distance entre la partie de raccordement inférieure (13b) et la partie de raccordement supérieure (13a) pour ajuster l'angle du plan d'émission (B) des dispositifs d'émission de lumière (3) par rapport à ladite base (9) ;
cet avertisseur lumineux (1) étant **caractérisé par le fait que** :
ledit appareil indicateur (1) comprend des dispositifs de blocage (15) associés à ces éléments d'espacement réglables et une partie fixe (13a) desdites parties de raccordement inférieure et supérieure (13a, 13b) et capable de bloquer le vissage et le dévissage de chaque élément d'espacement réglable (10, 11, 12) dudit dispositif de support (8) par rapport à la partie correspondante de raccordement réglable (13b) ;
ladite pièce de raccordement réglable (13b) est dite pièce de raccordement inférieure (13b), laquelle est constituée d'un trou taraudé (16) foré dans la base (9), le corps porteur (2) étant doté d'un fond (17) et chacune des parties de raccordement supérieures (13a) étant constituée d'une portion d'appui (17a) dudit fond (17), ces éléments réglables (10, 11, 12) étant munis d'une face de butée (18) pouvant être engagée en soutien à la partie correspondante d'appui (17a) du fond (17) ;
les portions d'appui (17a) du fond (17) sont dotées de bases filetées (19), lesdits éléments d'espacement réglables (10, 11, 12) ayant un trou passant (20) coaxial avec la portion filetée (14) de ces mêmes éléments d'espacement réglables (10, 11, 12), et les dispositifs de blocage (15) comprenant des vis (21), chacune de celles-ci s'engageant dans un trou passant (20) des éléments d'espacement réglables (10, 11, 12) et une base filetée (19) du fonds (17) susmentionné afin de bloquer chaque élément d'espacement réglable (10, 11, 12) dudit dispositif de support (8) au fond (17) dudit corps porteur (2).

2. Appareil indicateur lumineux (1) selon la revendication 1, **caractérisé par le fait que** les portions d'appui (17a) du fond (17) susmentionné sont circonférentielles par rapport à l'axe longitudinal (A) du corps porteur (2) et placées à intervalles angulaires réguliers autour dudit axe longitudinal (A).

3. Appareil indicateur lumineux (1) selon la revendication 2 **caractérisé par le fait que** la base (9) du dispositif de support (8) comprend une partie centrale (24) et trois bras (25), lesquels sont reliés à la partie centrale (24) et ont des extrémités libres (25a) s'étendant de façon radiale à partir de ladite partie centrale (24), chaque trou taraudé (16) de ladite base (9) étant percé sur un correspondant desdits bras (25).

4. Appareil indicateur lumineux (1) selon la revendication 3, **caractérisé par le fait que** la partie centrale (24) de ladite base (9) est dotée d'un siège de raccord (26) coaxial centré sur l'axe longitudinal (A) du corps porteur (2) susmentionné et susceptible de se raccorder à une tige de support (27) de l'avertisseur lumineux (1).

5. Appareil indicateur lumineux (1) selon l'une ou l'autre des revendications précédentes, **caractérisé par** le fait de comprendre un dispositif de détection d'horizontalité (28) attaché au corps porteur (2) et capable d'indiquer l'inclinaison du plan d'émission (B) des dispositifs d'émission de lumière (3) par rapport à la position horizontale.

6. Appareil indicateur lumineux (1) selon la revendication 5, **caractérisé par le fait que** le dispositif de détection d'horizontalité (28) comprend une capsule étanche (29) contenant deux fluides dont le premier fluide forme une bulle flottant dans le second fluide, cette capsule étanche (29) étant dotée d'une partie supérieure transparente (30) constituée d'une calotte sphérique et ayant au moins un axe central de symétrie (C) parallèle à l'axe longitudinal (A) dudit corps porteur (2), la position de la bulle susmentionnée par rapport à l'axe central de symétrie (C) indiquant l'inclinaison du plan d'émission (B) desdits dispositifs d'émission de lumière (3) par rapport à la position horizontale.

7. Appareil indicateur lumineux (1) selon la revendication 6, **caractérisé par le fait que** le dispositif de détection d'horizontalité (28) comprend une tige de support (31) reliée mécaniquement au corps porteur (2) et à la capsule étanche (29) sus-citée, ladite capsule étanche (29) étant soutenue par la tige de support (31) en question avec l'axe central de symétrie (C) coïncidant avec l'axe longitudinal (A) dudit corps porteur (2).
